Europäisches Patentamt

European Patent Office

Office européen des brevets

(19)

(11) **EP 0 759 708 B1**

(12) **FASCICULE DE BREVET EUROPEEN**

(45) Date de publication et mention
de la délivrance du brevet:
**16.08.2000 Bulletin 2000/33**

(21) Numéro de dépôt: **96907545.6**

(22) Date de dépôt: **18.03.1996**

(51) Int Cl.⁷: $A41H\ 3/00$, $A41H\ 43/00$

(86) Numéro de dépôt international:
**PCT/FR96/00406**

(87) Numéro de publication internationale:
**WO 96/28985 (26.09.1996 Gazette 1996/43)**

(54) **PROCEDE POUR LA COUPE AUTOMATIQUE DE PIECES DANS UN TISSU A MOTIF**

VERFAHREN ZUM AUTOMATISCHEN SCHNEIDEN EINES GEMUSTERTEN STOFFES

METHOD FOR AUTOMATICALLY CUTTING PORTIONS OF A PATTERNED FABRIC

(84) Etats contractants désignés:
**DE ES FR GB IT**

(30) Priorité: **17.03.1995 FR 9503111**

(43) Date de publication de la demande:
**05.03.1997 Bulletin 1997/10**

(73) Titulaire: **LECTRA SYSTEMES**
**33610 Cestas (FR)**

(72) Inventeur: **BERCAITS, Jean-Louis**
**F-33610 Canejan (FR)**

(74) Mandataire: **Joly, Jean-Jacques et al**
**Cabinet Beau de Loménie**
**158, rue de l'Université**
**75340 Paris Cédex 07 (FR)**

(56) Documents cités:
**EP-A- 0 518 473    EP-A- 0 577 842**
**WO-A-91/17029    DE-A- 3 519 806**
**US-A- 4 853 866**

## Description

La présente invention concerne un procédé pour la coupe automatique de pièces dans un tissu à motif.

Des domaines d'application de l'invention sont notamment les industries de l'habillement et de l'ameublement.

Lorsque la réalisation d'articles d'habillement ou d'éléments d'ameublement implique un assemblage de pièces coupées dans un tissu, il existe des contraintes particulières si le tissu est à motif, l'expression tissu à motif désignant ici toute matière textile souple en feuille imprimée avec un motif qui se répète avec des pas réguliers.

En effet, il est alors souhaitable, voire nécessaire, de respecter la continuité du motif entre deux pièces assemblées, par exemple deux parties d'un vêtement cousues l'une à l'autre, ou deux pièces destinées à être voisines, par exemple deux parties de vêtement situées côte à côte lorsque le vêtement est porté, ou deux coussins d'un canapé posés côte à côte.

Afin de respecter ces contraintes, il est connu d'associer aux pièces des repères de position absolue ou relative et d'établir une hiérarchie entre pièces principales et pièces secondaires.

Un repère de position absolue est normalement associé à une pièce principale. Il caractérise le positionnement absolu de la pièce principale par rapport au motif du tissu. La position d'une pièce par rapport au motif est caractérisée par le fait qu'un point donné de la surface de la pièce occupe une position relative déterminée par rapport aux motifs qui l'entourent. Ainsi, des pièces dont les emplacements à la surface du tissu se déduisent les unes des autres par des translations d'un nombre entier de pas de motif occupent une même position par rapport au motif.

Des repères de position relative sont associés à deux pièces devant être assemblées en tenant compte d'impératifs liés à l'existence du motif. Ils identifient les emplacements de deux points de raccord devant être amenés en correspondance lors de l'assemblage des pièces.

Par exemple, dans le cas d'une veste, une pièce de devant peut constituer une pièce principale. Un repère de position absolue est éventuellement associé à la pièce de devant par exemple lorsque l'on désire qu'un motif complet soit visible en un emplacement particulier de cette pièce. Une manche, l'encolure, un rabat de poche constituent alors des pièces secondaires. Pour chacune de celles-ci, l'emplacement d'un point de raccord est déterminé pour correspondre à l'emplacement du point de raccord associé sur la pièce principale.

Bien entendu, des points de raccord peuvent être définis non seulement entre une pièce principale et une pièce secondaire, mais aussi entre deux pièces secondaires, l'une d'entre elles assurant alors la fonction de pièce principale vis-à-vis de l'autre.

Il est bien connu par ailleurs de réaliser la coupe de tissu de façon automatique. Des installations de coupe automatique sont commercialisées par la demanderesse depuis de nombreuses années.

Un procédé de coupe automatique comprend une opération de placement qui consiste à déterminer de façon optimale les positions des pièces à couper dans une bande de tissu. Le placement est choisi de façon à minimiser les pertes de tissu tout en respectant certaines contraintes : respect du droit fil, marge minimale suffisante entre pièces, etc... Dans le cas d'un tissu à motif, s'ajoutent les contraintes liées au respect des emplacements des repères de position absolue et de position relative. Des systèmes permettant à un opérateur de définir des placements à l'aide de stations de travail informatiques et de logiciels spécialisés sont connus, y compris dans le cas de tissus à motifs.

Afin d'effectuer la coupe, le tissu est étalé sur une table de coupe en une ou plusieurs couches superposées qui peuvent être maintenues par aspiration à travers la table. La coupe est effectuée au moyen d'un outil porté par une tête dont les déplacements, par rapport à la table de coupe, sont commandés en fonction du placement prédéterminé. La coupe peut être effectuée par lame vibrante, laser, jet d'eau,...

Des difficultés particulières apparaissent lorsque le tissu est un tissu à motif.

Un premier problème à résoudre, si l'on cherche à couper simultanément plusieurs couches de tissu à motif superposées, est celui de la constitution du matelas de couches de sorte que les motifs soient exactement superposés. Une technique connue consiste à utiliser des aiguilles qui traversent le matelas et s'opposent à des glissements entre les couches. On pourra se référer au document FR-A-2 644 484.

Un deuxième problème qui se pose en pratique est celui de la non-coïncidence entre le modèle de tissu utilisé pour le placement et le tissu réellement étalé sur la table de coupe. Cette non-coïncidence se traduit notamment de la façon suivante. Si l'on se place sur la table de coupe aux coordonnées d'un point de référence d'une pièce du placement, on constate que le point correspondant sur le tissu étalé n'occupe pas toujours la position relative souhaitée par rapport au motif du tissu réel. Ces écarts sont plus ou moins grands et en pratique inévitables. Ils tiennent à des défauts d'impression et/ou à des déformations du tissu qui peuvent se traduire par des irrégularités dans le pas de répétition du motif. Il en résulte que le placement préétabli, ou placement théorique, doit être modifié pour correspondre à la réalité du tissu étalé.

Un procédé pour effectuer cette modification de placement de façon automatique ou semi-automatique est décrit dans le document US-A-4 853 866. Après étalement du tissu à motif sur la table de coupe, un capteur d'image (caméra) est amené aux différents emplacements correspondant aux coordonnées des points de référence. L'image réelle du tissu au voisinage de l'emplacement supposé d'un point de référence de position absolue est comparée avec l'image théorique que devrait présenter ce voisinage, la comparaison étant effectuée par numérisation de l'image réelle et corrélation avec une image théorique enregistrée. En outre, les images réelles du tissu au voisinage des points de raccord sont prélevées et mémorisées afin d'effectuer une comparaison entre les images réelles des voisinages de deux points de raccord correspondants. Les résultats des comparaisons sont utilisés pour décaler les positions des pièces dans le placement afin d'obtenir un placement modifié qui correspond à la réalité du tissu étalé et selon lequel celui-ci est ensuite coupé.

Ce procédé connu présente quelques inconvénients qui affectent la productivité et augmentent sensiblement le coût de l'installation. Ainsi, l'exploration complète de tous les emplacements correspondant aux coordonnées mémorisées des points de référence demande un temps non négligeable pendant lequel l'installation de coupe est indisponible. De plus, cette exploration complète s'accompagne de mémorisations d'images qui demandent des moyens de stockage numériques importants, l'image du voisinage d'un point de raccord sur une pièce devant être conservée tant que l'image du point de raccord correspondant d'une autre pièce n'a pas été détectée et numérisée, et que le traitement de comparaison entre ces deux images n'a pas été effectué. En outre, l'exploration complète demande une table de coupe suffisamment longue pour que la longueur de tissu correspondant à un placement complet puisse y être étalée, de sorte que ce procédé connu ne peut pas être mis en oeuvre dans des installations utilisant des tables de coupe de longueur réduite pour la coupe de tissus unis ou sans raccord.

Il a aussi été proposé dans le document WO-A-91/17029 d'introduire dans le placement des pièces témoins de formes répétitives à des intervalles constants égaux à un nombre entier de pas théoriques de répétition du motif du tissu. L'examen de l'emplacement des pièces témoins sur le tissu étalé permet de vérifier s'il existe un décalage entre le pas théorique et le pas réel de répétition du motif du tissu, et de corriger éventuellement le placement. Cet examen peut être réalisé par découpe des pièces témoins ou par examen visuel de leur emplacement sur le tissu étalé. Le procédé du document WO-A-91/17029 nécessite donc une interruption de la découpe à chaque nouvelle pièce témoin, ce qui pénalise le rendement de façon importante, d'autant que l'espacement entre pièces témoins ne doit pas être trop important afin de pouvoir corriger suffisamment rapidement un décalage survenant entre les pas théorique et réel de répétition du motif. De plus, la présence de pièces témoins dans le placement complique ce dernier et entraîne une perte de matière inévitable.

Le document US-4 853 866 décrit un procédé et un dispositif pour ajuster des pièces à découper dans un tissu à motif. La technique décrite dans ce document met en oeuvre à la fois des points de repère absolu et des points de repère relatif.

L'invention a pour objet de fournir un procédé de coupe automatique de pièces dans un tissu à motif qui ne présente pas les inconvénients mentionnés ci-dessus.

En particulier, l'invention a pour but de fournir un procédé de coupe automatique de tissu à motif dont les performances, en ce qui concerne la productivité, ne sont pratiquement pas dégradées en comparaison avec les procédés automatiques de coupe de tissus unis ou sans raccords.

L'invention a aussi pour but de fournir un procédé grâce auquel la découpe d'un tissu à motif peut être commencée avant modification complète du placement théorique, autorisant l'utilisation d'une table de coupe de longueur réduite telle qu'utilisée pour des tissus unis ou sans raccord, et sur laquelle une longueur de tissu correspondant à un placement est amenée de façon progressive, au fur et à mesure de la coupe.

L'invention a encore pour but de fournir un procédé grâce auquel la correction d'un placement théorique sur un tissu à motif, en vue de la coupe, peut être effectuée avec des moyens réduits de mémorisations d'images.

Ce but est atteint grâce à un procédé pour la coupe automatique de pièces dans un tissu à motif se répétant selon un certain pas, dit pas du motif, comprenant les étapes de :

- détermination d'un placement théorique des pièces sur le tissu,
- mémorisation d'informations représentatives du placement théorique des pièces,
- étalement d'au moins une couche de tissu à découper,
- contrôle sur le tissu étalé afin de détecter un décalage éventuel entre le pas réel du motif sur le tissu étalé et le pas théorique du motif utilisé pour la détermination du placement théorique, comprenant les opérations de :
- saisie d'images de parties du tissu étalé, et
- vérification sur les images saisies que des emplacements correspondant à des informations mémorisées occupent des positions voulues par rapport au motif réel du tissu étalé, et
- modification éventuelle du placement théorique en fonction du résultat du contrôle afin que le placement théorique soit adapté au pas réel du motif sur le tissu étalé.

Avantageusement, le contrôle est effectué successivement en différents emplacements sur le tissu étalé en partant d'une extrémité longitudinale de celui-ci, et le placement est modifié progressivement au fur et à mesure du contrôle.

A chaque contrôle,

- la position d'une pièce située à l'emplacement où le contrôle est effectué est, le cas échéant, modifiée de façon définitive dans le placement, en fonction du pas réel de motif détecté, et

- les positions de pièces situées dans la partie du tissu non encore contrôlée sont, le cas échéant, modifiées de façon anticipée dans le placement.

La modification anticipée du reste du placement peut être effectuée de la même façon que pour la pièce située à l'emplacement où le contrôle est effectué, ou en fonction des différents décalages détectés lors des contrôles effectués depuis ladite extrémité longitudinale du tissu. Dans ce dernier cas, il est possible de corriger à l'avance un décalage évolutif dont la variation peut être prédite à partir des premiers décalages détectés. Un tel décalage évolutif peut notamment se produire lorsque le pas de répétition du motif dans le tissu étalé n'est pas exactement égal au pas de répétition du motif dans le tissu théorique à partir duquel le placement a été déterminé. Dans le cas de placements relativement longs, cette erreur sur le pas de répétition, si elle est importante, pourrait se traduire, en étant cumulée, par un décalage d'un ou plusieurs pas lors du contrôle effectué à la fin du placement, si une modification anticipée n'est pas effectuée.

La réalisation du contrôle sur le tissu étalé par détection du pas réel de motif et mesure du décalage entre celui-ci et le pas de motif du tissu théorique permet une correction progressive du placement en partant d'une extrémité longitudinale du tissu. La coupe du tissu peut alors être effectuée, en partant de cette extrémité, au fur et à mesure du contrôle. Il ne pourrait en être ainsi lorsque le contrôle est effectué par comparaison d'images, comme dans l'art antérieur évoqué plus haut.

La possibilité de commencer la coupe avant qu'une correction complète du placement ait été achevée est particulièrement intéressante. En effet, cette particularité de l'invention lui permet d'être mise en oeuvre avec une installation de coupe automatique dans laquelle la table de coupe a une longueur réduite, éventuellement inférieure à la longueur totale d'un placement. Le tissu est avancé sur la table de façon intermittente, au fur et à mesure de la coupe, jusqu'à faire défiler l'ensemble du placement. A chaque fois qu'une nouvelle longueur de tissu est amenée sur la table de coupe, un contrôle est effectué sur la portion de tissu étalé sur la table, le placement est éventuellement modifié en fonction des résultats du contrôle et les pièces situées dans une zone de travail de la table de coupe peuvent être coupées. Le procédé selon l'invention, en permettant l'utilisation de tables de coupe de longueur réduite telles que celles employées pour des tissus unis ou sans raccord élimine donc la nécessité de recourir à des installations spécifiques pour la coupe de tissus à motif.

Avantageusement encore, l'opération de contrôle est effectuée au moins partiellement pendant l'avance du tissu sur la table. En particulier, la saisie d'images de parties de surface du tissu étalé peut être réalisée au moins en partie pendant l'avance du tissu.

Ainsi, au gain de productivité obtenu par la possibilité de réaliser partiellement la modification du placement en temps masqué pendant la coupe, il est possible d'ajouter le gain apporté par la réalisation partielle du contrôle en temps masqué pendant l'avance du tissu.

Selon une autre particularité du procédé, un point caractéristique du motif du tissu, dont la position se répète de la même façon que le motif, est sélectionné, et la détection du pas réel de motif est effectuée en détectant des positions de points caractéristiques de motif sur le tissu.

Ainsi, pour chacune de plusieurs pièces à couper, le procédé peut comporter les étapes de :

- définition d'au moins un point de référence coïncidant avec un point caractéristique de motif du tissu théorique,
- mémorisation d'informations représentatives de la position du point de référence, et
- réalisation d'un contrôle par détection du décalage éventuel entre le point sur le tissu étalé dont les coordonnées correspondent aux informations de position mémorisées et le point caractéristique de motif le plus proche sur le tissu étalé, et repositionnement définitif de la pièce dans le placement en fonction du décalage détecté.

A chaque contrôle, pour chacune des pièces non encore traitées auxquelles sont associés des points de référence, les informations représentatives des positions des points de référence sont modifiées de la même manière que la position de la pièce est modifiée de façon anticipée.

L'étape de contrôle, pour chaque pièce concernée, peut comprendre les opérations qui consistent à :

- capter une image d'une partie de la surface du tissu étalé incluant le point sur le tissu dont les coordonnées sur le tissu étalé correspondent aux informations de position mémorisées pour le point de référence de la pièce, et
- détecter le décalage entre la position réelle de ce point sur le tissu et la position réelle du point caractéristique de motif le plus proche dans l'image captée.

Le contrôle peut être réalisé de façon semi-automatique, et comporter alors :

- l'affichage de l'image captée sur un écran,
- la matérialisation sur l'écran de la position du point de référence dont les coordonnées correspondent aux informations de position mémorisées, et
- la saisie à partir de l'image affichée sur l'écran de la position réelle du point caractéristique de motif le plus proche de la position matérialisée du point de référence.

La saisie de la position réelle du point caractéristique de motif le plus proche de la position matérialisée du point de référence est effectuée en indiquant ladite position réelle au moyen d'un curseur actionné par un opérateur.

Le contrôle peut aussi être effectué de façon automatique en analysant l'image captée pour déterminer les positions réelles des points caractéristiques de motif qu'elle contient et en recherchant celle qui est la plus proche de la position du point de référence dont les coordonnées correspondent aux informations de position mémorisées, de façon à mesurer le décalage éventuel entre la position du point de référence et la position réelle du point caractéristique le plus proche.

Que ce soit de façon semi-automatique ou automatique, dès qu'une image est traitée, la correction éventuelle de la position de la pièce correspondante dans le placement est quasi instantanée et la coupe de cette pièce peut être démarrée avant même que l'image suivante soit traitée.

Pour des pièces auxquelles sont associés des points de référence de position relative, ou points de raccord, on choisira avantageusement comme points de référence le point caractéristique de motif le plus proche du point de raccord afin de conférer au point de raccord sur le tissu étalé une position aussi précise que possible.

De la même façon, pour une pièce principale ayant un point de référence de position absolue, on choisira, comme point de référence, le point caractéristique de motif le plus proche du point de référence de position absolue.

L'invention a également pour objet un dispositif pour la coupe automatique de pièces dans un tissu, comportant:

- des moyens de mémorisation d'un placement théorique de pièces sur le tissu
- une table de coupe
- des moyens pour amener le tissu sur la table de coupe
- un capteur d'images dont les déplacements au-dessus de la table de coupe sont commandés suivant deux directions X et Y

caractérisé en ce qu'il comporte en outre un calculateur spécialement programmé pour:

déterminer, à partir d'images fournies par le capteur d'images, un décalage éventuel entre le pas réel du motif sur le tissu étalé et un pas théorique du placement théorique

- et pour modifier éventuellement le placement théorique, en fonction d'un tel décalage, afin que le placement théorique soit adapté au pas réel du motif sur le tissu étalé.

L'invention sera mieux comprise à la lecture de la description faite ci-après, à titre indicatif mais non limitatif, en référence aux dessins annexés sur lesquels :

- la figure 1 est une vue générale très schématique d'une installation permettant la mise en oeuvre du procédé selon l'invention ;
- la figure 2 est une vue illustrant très schématiquement un placement sur un tissu à motif ;
- les figures 3A et 3B sont des vues à échelle agrandie de zones du placement de la figure 2 où se trouvent des points de référence de position, respectivement absolue et relative,
- les figures 4A et 4B sont des vues d'images de zones de la surface du tissu étalé où se trouvent des points dont les coordonnées correspondent aux informations de position relatives aux points de référence des figures 3A et 3B; et
- la figure 5 est un organigramme illustrant le déroulement d'un mode de mise en oeuvre du procédé selon l'invention.

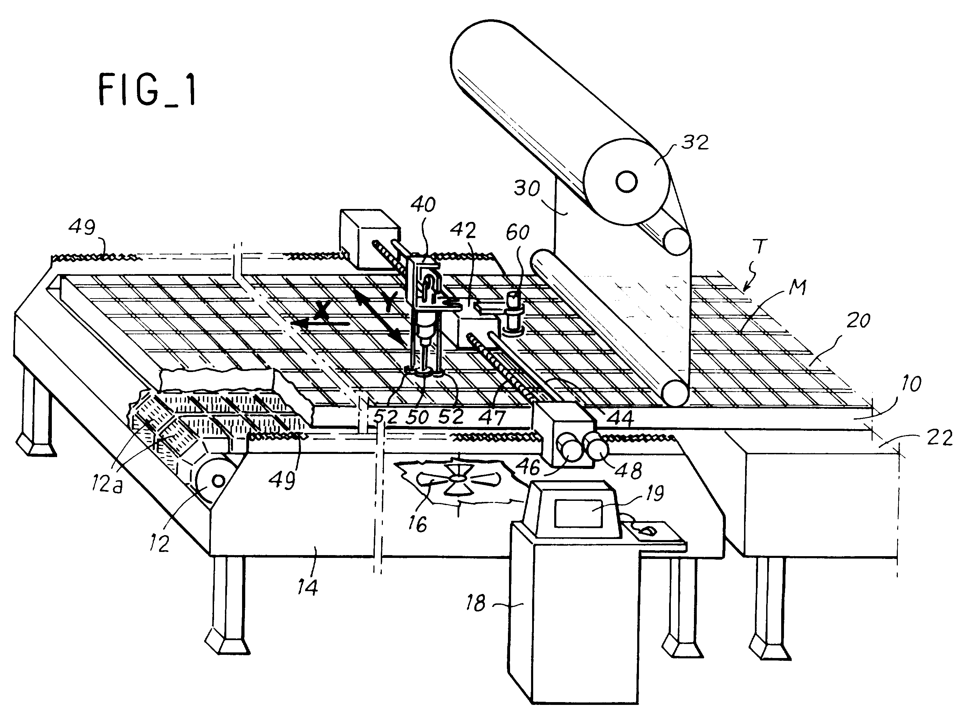

Un mode de réalisation d'une installation de coupe automatique permettant la mise en oeuvre d'un procédé selon l'invention est illustré par la figure 1 de façon très schématique.

La coupe est effectuée sur une table de coupe 10 constituée par le brin supérieur horizontal d'un convoyeur sans fin 12. Celui-ci est logé, à l'exception de sa surface supérieure délimitant la table 10, à l'intérieur d'un caisson 14. Des moyens d'aspiration, tels que des extracteurs 16, sont disposés à l'intérieur du caisson afin d'y établir une dépression.

Le convoyeur 12 est constitué de blocs supports 12a présentant ou ménageant des passages faisant communiquer l'intérieur du caisson avec la surface de la table 10. Les blocs 12a, par exemple en matière plastique, comportent une base de laquelle font saillie une pluralité d'éléments filiformes. De la sorte, une lame peut pénétrer dans la surface de la table 10 et se mouvoir horizontalement dans toutes les directions sans être endommagée et sans endommager les blocs supports 12a.

Un tissu T à couper portant un motif répétitif M est amené sur la table 10 en une seule couche ou, comme illustré, en couches superposées formant un matelas 20. Celui-ci est réalisé sur une table de matelassage 22, en amont de la table de coupe, en veillant à superposer exactement les motifs M dans les couches de tissu, le maintien des couches de tissu les unes par rapport aux autres pouvant être assuré, de façon connue, au moyen d'aiguilles traversant le matelas 20. L'avance du matelas 20 sur la table de coupe en direction X est effectuée par commande du moteur d'entraînement (non représenté) du convoyeur 12.

Un film transparent 30 en matière plastique étanche à l'air, par exemple un film de polyéthylène trié d'un rouleau 32, est déposé sur le matelas 20 afin de le couvrir complètement.

La coupe du matelas 20 porté par la table 10 et recouvert du film 30 est réalisée au moyen d'une tête de coupe 40. La tête de coupe peut être amenée en toute position au-dessus de la table de coupe 10 par commande de son déplacement horizontal parallèlement à la direction longitudinale X du convoyeur 12 et à la direction transversale Y perpendiculaire à X.

La tête de coupe 40 est montée sur un bloc 42 qui est mobile en direction Y le long d'une poutre transversale 44, sous la commande d'un moteur 46. La poutre 44 est guidée à ses extrémités le long des bords longitudinaux du convoyeur 12 et est entraînée en direction X sous la commande d'un moteur 48. L'entraînement du bloc 42 peut être réalisé de façon classique par l'intermédiaire de câbles ou, comme dans l'exemple illustré, de vis sans fin 47. L'entraînement de la poutre 44 peut également être réalisé par l'intermédiaire de câbles ou vis sans fin ou, comme illustré, par roues dentées et crémaillères 49, celles-ci étant montées sur les rebords longitudinaux supérieurs du caisson 14.

La tête de coupe 40 porte une lame de coupe 50 suspendue verticalement et passant à travers un pied de biche 52. La lame 50 et le pied de biche 52 sont mobiles entre une position relevée (repos) et une position abaissée dans laquelle le pied de biche est en contact avec le matelas 20. La coupe du tissu est réalisée en entraînant la lame 50 en mouvement vertical alternatif et en déplaçant la tête de coupe 40, la lame 50 et le pied de biche 52 étant en outre orientables autour d'un axe vertical pour suivre le contour des pièces à couper dans le matelas.

Les déplacements de la tête de coupe 40 en X, Y, l'abaissement et le relevage de la lame de coupe 50 et du pied de biche 52, le mouvement vertical alternatif de la lame 50 et l'orientation angulaire de la lame de coupe 50 et du pied de biche 52 sont commandés au moyen d'un calculateur 18 par l'intermédiaire de liaisons et organes d'entraînement (non représentés). Le calculateur 18 commande en outre l'avance du convoyeur 12 et la mise en dépression du caisson 14 grâce à quoi le matelas 20 recouvert du film étanche 30 est fermement maintenu sur la table de coupe 10.

Une installation telle que décrite ci-avant est bien connue de l'homme de l'art. On pourra par exemple se référer au document US-A-3 848 490.

Les déplacements de la tête de coupe en X, Y sont commandés de manière à couper des pièces dans le matelas suivant un placement déterminé. Pendant la coupe, l'orientation de la lame de coupe 50 est commandée de sorte qu'elle reste tangente ou sensiblement tangente au contour de la pièce coupée. Lorsqu'une section du matelas 20 présente sur la table de coupe 10 a été coupée, avec le film 30, une avance du convoyeur 12 est commandée pour amener une nouvelle section du matelas, ou un nouveau matelas, sur la table de coupe. Il est aussi possible de réaliser l'avance du matelas sans interruption de la coupe, des longueurs successives de matelas étant amenées dans une zone de travail de la table de coupe 10, au fur et à mesure de la progression de l'opération de coupe. Un procédé permettant de réaliser l'avance du matelas en temps masqué pendant la coupe est décrit dans le document WO-A-95/02489.

L'opération de placement, préalable à la coupe, consiste à déterminer les emplacements des pièces à couper. Le placement est réalisé de manière à minimiser les pertes de matière, tout en respectant certaines contraintes (respect du droit fil, espacement minimum entre les pièces à couper, ...). Dans le cas d'un tissu à motif répétitif, des impératifs esthétiques peuvent imposer, d'une part, pour certaines pièces, la présence d'un motif complet en un endroit particulier de la pièce, d'autre part, pour deux pièces destinées à être assemblées, une coupe de ces pièces assurant par exemple la continuité du motif après assemblage.

A cet effet, il est connu de définir des points de référence de position absolue dont la position sur une pièce est déterminée pour qu'un motif apparaisse en un endroit désiré. Il est connu également de définir des points de référence de position relative, ou points de raccord, dont les positions respectives sur deux pièces sont choisies pour permettre, en faisant coïncider les points de raccord, un assemblage de ces deux pièces de façon désirée, par exemple avec continuité du motif.

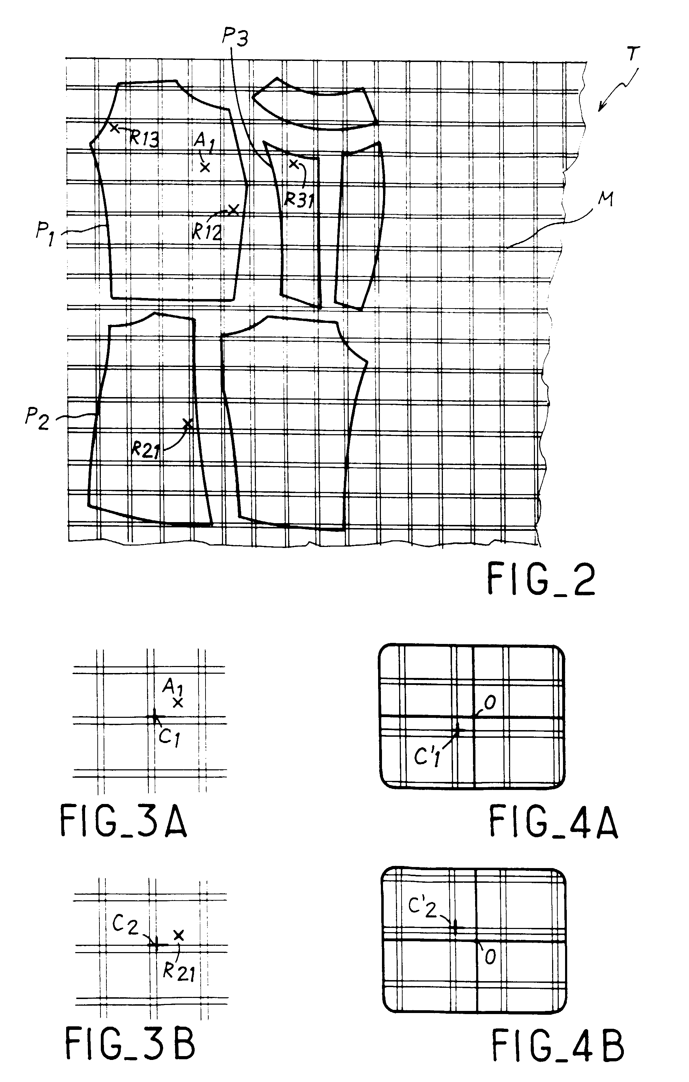

Pour le tissu T à motif répétitif M tel que celui dont le modèle est représenté sur la figure 2, le placement des pièces est par exemple réalisé comme suit. Pour des pièces telles que la pièce $P_1$ ayant un point $A_1$ de référence de position absolue, le placement est effectué en respectant la position du point $A_1$ par rapport au motif. Les points de raccord éventuellement portés par la même pièce, tels que les points $R_{12}$, $R_{13}$, sont alors automatiquement placés. Pour des pièces telles que les pièces $P_2$, $P_3$ destinées à être assemblées à la pièce $P_1$ et partant des points de raccord respectifs $R_{21}$, $R_{31}$ correspondant aux points de raccord $R_{12}$, $R_{13}$, le placement est effectué en respectant la position des points $R_{21}$, $R_{31}$ par rapport au motif. Dans l'hypothèse où la pièce $P_1$ ne porte pas de point de référence de position absolue, son placement est effectué de manière à respecter la position d'un point de raccord $R_{12}$ ou $R_{13}$ par rapport au motif.

Le placement est habituellement effectué par un opérateur au moyen d'une station de travail informatisée et de logiciels spécialisés. Les emplacements et contours des pièces à couper sont mémorisés, ainsi que des informations représentatives des positions des points de référence de position absolue et des points de raccord.

L'information représentative de la position d'un point de référence de position est ici mémorisée sous forme des coordonnées d'un point caractéristique de motif le plus proche.

Un point caractéristique de motif est un élément aisément reconnaissable du motif du tissu qui se répète avec le même pas que le motif. Dans le cas du tissu T de la figure 2, où le motif M est formé de carreaux bordés d'une double ligne, le point caractéristique C choisi arbitrairement est par exemple l'angle inférieur gauche d'un carreau.

Selon le motif du tissu, toute particularité graphique pourra être choisie comme point caractéristique, par exemple une intersection de lignes, une tache,... dès lors qu'elle est facilement identifiable par un opérateur ou, de façon automatique, par traitement d'image.

Ainsi, dans l'exemple illustré par les figures 2, 3A et 3B, l'information de position relative au point $A_1$ est constituée par les coordonnées du point caractéristique de motif $C_1$ le plus proche de $A_1$ et l'information de position relative au point $R_{21}$ est constituée par les coordonnées du point caractéristique de motif $C_2$ le plus proche de $R_{21}$. Il en est de même pour les autres points de référence de position.

La mémorisation des informations relatives aux points de référence de position permet, avant d'effectuer la coupe du tissu, de vérifier que les emplacements des pièces déterminés lors du placement sont corrects par rapport au motif du tissu étalé sur la table de coupe. En effet, il peut exister des différences entre le tissu "théorique" utilisé pour définir le placement et le tissu réel étalé. Ces différences peuvent provenir d'écarts entre les pas de répétition des motifs ou de déformations du tissu souvent inévitables, lors du placement et/ou de l'avance sur la table de coupe.

Aussi, avant la coupe des premières pièces, il est procédé à une étape de contrôle afin de déterminer si le placement préétabli est correct et, le cas échéant, de le corriger. Le contrôle est ici réalisé en se plaçant sur le tissu étalé, aux coordonnées mémorisées des points caractéristiques associés à des points de référence de position et en vérifiant si des points caractéristiques de motif du tissu étalé se trouvent bien à ces emplacements. Dans la négative, à chaque fois on recherche le point caractéristique le plus proche sur le tissu étalé et l'écart entre la position théorique mémorisée et la position réelle la plus proche représente le décalage à corriger pour la pièce correspondante dans le placement.

Le contrôle sur le tissu étalé est effectué, pour chaque pièce portant un point de référence pour lequel des coordonnées d'un point caractéristique de motif sont mémorisées, en prenant une image d'une partie de la surface du tissu autour d'un point ayant ces coordonnées.

A cet effet, l'installation illustrée par la figure 1 est munie d'un capteur d'images 60, par exemple sous forme d'un appareil de prise de vues ou d'une caméra, monté sur le bloc 42. Le déplacement du capteur d'images au-dessus de la table de coupe est commandé dans les directions X et Y de la même façon que la tête de coupe, au moyen du calculateur 18. Il pourrait toutefois être envisagé d'utiliser, pour commander le déplacement en X, Y du capteur d'images, des moyens différents de ceux utilisés pour commander le déplacement de la tête de coupe.

Les images fournies par le capteur 60 sont mémorisées dans une mémoire du calculateur 18 et peuvent être visualisées sur un écran 19 d'une station de travail associée au calculateur.

La figure 4A montre l'image, affichée sur l'écran 19, d'une partie de la surface du tissu étalé centrée sur un point dont les coordonnées sont celles, préenregistrées, du point caractéristique $C_1$ associé au point de référence de position $A_1$. Le centre O de l'écran correspond au centre de l'image, donc aux coordonnées mémorisées du point $C_1$. On constate, dans l'exemple illustré, que le centre de l'écran ne correspond pas à un point caractéristique de motif, le point caractéristique de motif le plus proche étant $C'_1$. On considère que le point $C'_1$ aurait du se trouver au centre de l'écran, le vecteur $\overrightarrow{OC'}_1$ représentant le décalage entre la position de la pièce $P_1$ par rapport au motif théorique dans le placement et sa position réelle par rapport au motif du tissu étalé conformément au placement. La correction du placement est effectuée de manière à annuler ce décalage, c'est-à-dire en modifiant la position de la pièce $P_1$ dans le placement par translation suivant un vecteur opposé au vecteur $\overrightarrow{OC'}_1$.

La mesure du vecteur de décalage $\overrightarrow{OC'}_1$ est effectuée par exemple en déterminant les coordonnées du point $C'_1$. Cela peut être réalisé par l'opérateur en indiquant, au moyen d'un curseur 19a, la position du point $C'_1$ sur l'écran 19, le calculateur 18 déterminant alors le vecteur $\overrightarrow{OC'}_1$ et corrigeant la position de la pièce $P_1$ dans le placement en conséquence.

En variante, les coordonnées du point $C'_1$ peuvent être déterminées par traitement automatique de l'image prise par le capteur d'images 60. Le traitement automatique consiste à rechercher dans l'image les positions des points caractéristiques de motifs et à sélectionner celui le plus proche du point théorique correspondant aux coordonnées préenregistrées. Il n'est alors pas nécessaire d'afficher les images sur un écran. Différents procédés de traitement d'images permettant d'effectuer cette recherche automatique peuvent être utilisés, par exemple par corrélation avec une image préenregistrée d'un point caractéristique de motif ou en utilisant un processus de recherche de décalage entre images semblables tel que par exemple celui décrit dans le document EP 0 518 473.

La figure 4B montre l'image, affichée sur l'écran 19, d'une partie de la surface du tissu étalé centrée sur un point dont les coordonnées sont celles, préenregistrées, du point caractéristique $C_2$ associé au point de référence de position $R_{21}$. Dans l'exemple illustré, il y a encore non-coïncidence entre le point O et un point caractéristique de motif, le plus proche point de caractéristique étant le point $C'_2$. La position de la pièce

$P_2$ dans le placement doit donc être corrigée en lui faisant subir une translation de vecteur $C'_2O$.

On procède de même pour toutes les pièces du placement portant un point de référence de position. L'étape de contrôle est effectuée sur les pièces concernées en partant de l'extrémité aval du tissu étalé, c'est-à-dire dans l'ordre dans lequel elles sont ensuite coupées.

Lorsqu'un décalage a été détecté pour une pièce, il peut être avantageux de corriger l'emplacement non seulement de cette pièce dans le placement mais aussi de toutes les autres pièces portant des points de référence de position dont les positions sur le tissu étalé n'ont pas été contrôlées. Il est de la sorte possible de corriger de façon anticipée des écarts systématiques entre le motif du tissu théorique utilisé pour le placement et le motif réel du tissu étalé.

Dans le cas d'écarts évolutifs entre les motifs théorique et réel, par exemple un pas de motif sur le tissu réel légèrement plus grand ou plus petit que le pas du motif sur le tissu théorique, une telle correction anticipée permet en outre qu'une erreur égale à un pas ou un nombre entier de pas de motif puisse se produire lors du contrôle par suite du cumul des écarts tout le long du placement.

Il peut encore être prévu que les décalages détectés successivement pour les différentes pièces contrôlées soient mémorisés afin de corriger de façon anticipée les positions des pièces non contrôlées en fonction de l'évolution des décalages détectés, par exemple en établissant une loi de variation à partir des mesures des décalages déjà détectés.

Il n'est pas nécessaire que l'intégralité du placement se trouve sur la table de coupe pour effectuer l'étape de contrôle. Les corrections éventuelles du placement sont effectuées séquentiellement et, dès qu'une image prise au moyen du capteur 60 a été traitée, il n'est plus nécessaire de la conserver en mémoire.

En pratique, dès qu'une section du matelas 20 est avancée sur la table de coupe, les images pour les différentes pièces dont les emplacements sont sur la table de coupe et qui portent des points de référence de position peuvent être prises séquentiellement et stockées, ce qui libère les moyens de commande du déplacement du bloc 42 pour effectuer la coupe. Celle-ci peut commencer avec la première pièce à couper dès que sa position a éventuellement été corrigée, le traitement des autres images pouvant être continué après le début de la coupe.

Il s'agit là d'un avantage très important du procédé en termes de productivité et de coût. En effet, le temps pris par le contrôle sur le tissu étalé, temps pendant lequel l'installation est indisponible pour la coupe, est limité au minimum. De plus, il n'est pas nécessaire que l'intégralité du placement se trouve sur la table de coupe pour effectuer le contrôle avant de commencer la coupe. Cela autorise l'utilisation d'une table de coupe de longueur réduite, donc moins encombrante et moins coûteuse. Cela autorise aussi de réaliser au moins partiellement l'avance du matelas en temps masqué pendant la coupe, conformément au procédé décrit dans le document WO-A-95/02489 déjà cité, donc d'accroître encore la productivité.

Il ne peut pas en être de même lorsque, comme décrit dans l'art antérieur, le contrôle de la position des points de raccord nécessite une comparaison entre deux images prises sur le tissu étalé. Non seulement il est alors nécessaire de balayer complètement le placement pour prélever toutes les images nécessaires, mais il faut aussi disposer de moyens de mémorisation importants pour stocker les images. Par rapport à ce procédé connu, le procédé selon l'invention est remarquable en ce que, pour des points de raccord, le repérage au moyen de points caractéristiques de motif évite la nécessité de faire des comparaisons d'images. En outre, le repérage au moyen de points caractéristiques de motif simplifie l'opération de contrôle, qu'elle soit effectuée par un opérateur ou automatiquement, et peut donc aussi être utilisée avantageusement pour les points de référence de position absolue.

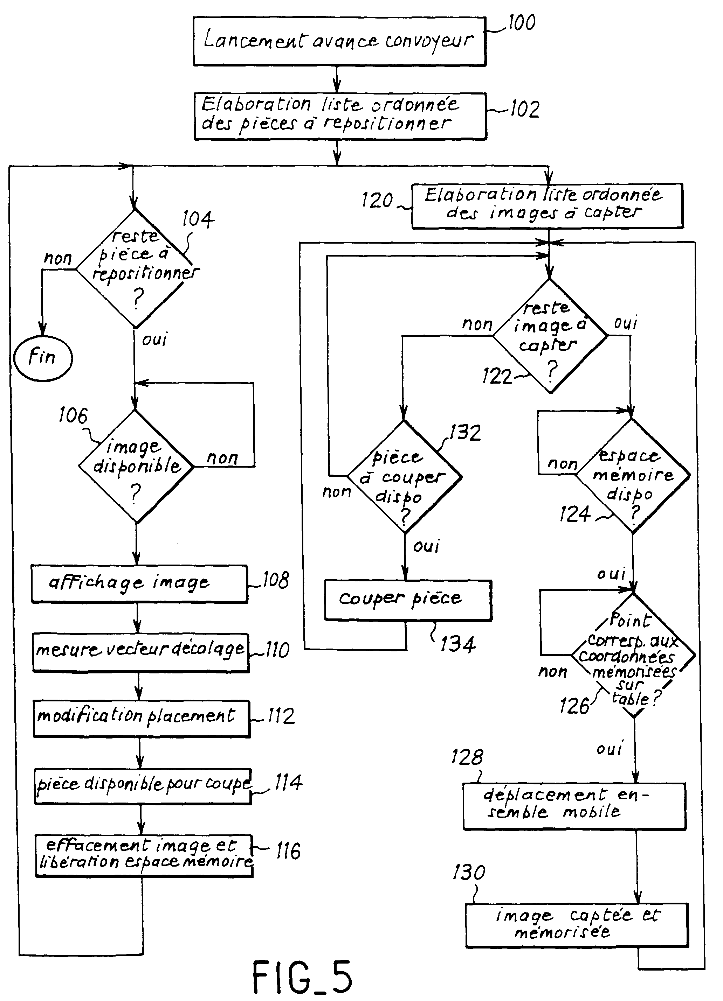

Un organigramme décrivant les opérations de correction éventuelle du placement et de coupe est illustré par la figure 5.

Au lancement d'une première avance du convoyeur 12 (phase 100), une liste ordonnée des pièces devant être le cas échéant repositionnées est élaborée (phase 102). Il s'agit des pièces dont l'emplacement est situé sur la portion de tissu amenée sur le convoyeur et qui comportent des points de référence de position, dans l'ordre où elles doivent être coupées.

Ensuite, les tâches graphiques au niveau de la station de travail et les tâches de commande de l'ensemble mobile portant le capteur d'images et la tête de coupe se déroulent en parallèle.

Au niveau de la station de travail, s'il reste une pièce à repositionner éventuellement dans la liste préétablie (test 104), on examine si l'image correspondante est disponible (test 106). Si le test 106 est négatif, on reste en attente de l'image. S'il est positif, l'image est affichée (étape 108), le vecteur de décalage est mesuré, automatiquement ou par déplacement manuel du curseur 19a (étape 110), le placement de la pièce concernée est modifié si nécessaire (étape 112), ainsi qu'éventuellement le placement des pièces non traitées, et la pièce concernée est déclarée disponible pour la coupe (étape 114), après quoi l'image est effacée en mémoire, libérant un espace mémoire (étape 116), avant de revenir au test 104. Si ce dernier est négatif, les tâches sont terminées dans l'attente d'un nouveau lancement du convoyeur.

Au niveau de la commande de l'ensemble mobile, une liste ordonnée des images à capter est élaborée (étape 120). Tant qu'il reste une image à capter (test 122) et si un espace mémoire est disponible (test 124), on examine si le point correspondant aux coordonnées du point caractéristique de motif pour la pièce concernée est sur la table (test 126). Si le test 126 est positif, le déplacement du capteur d'image est commandé (phase 128) et l'image désirée est captée et mémorisée (phase 130), après quoi on retourne au test 122. Si le test 124 est négatif, on attend qu'un espace mémoire soit disponible et si le test 126 est négatif, on attend que le point où le capteur d'images doit être positionné se trouve sur la plage de travail. Lorsqu'il ne reste plus d'image à capter (test 122), on examine si une pièce est disponible pour la coupe (test 132). Dans la négative, on retourne au test 122. Dans l'affirmative, la pièce est coupée (phase 134) et l'on retourne au test 122.

L'organigramme de la figure 5 montre bien que le déplacement de l'ensemble mobile afin de capter des images peut se produire dès le début de l'avance du tissu et que la coupe d'une pièce peut démarrer dès que la position de la pièce a été corrigée avant même la fin du traitement de la pièce suivante. En outre, le système peut se contenter d'un nombre d'espaces mémoire limité pour la mémorisation des images.

Dans le mode de réalisation décrit ci-avant, le point de référence choisi pour une pièce est le point caractéristique de motif le plus proche du point de référence de position absolue ou du point de raccord. Cela permet de mesurer le pas réel du motif sur le tissu étalé au plus près de l'emplacement des points de référence de position et, par conséquent, de garantir pour ceux-ci une position aussi exacte que possible par rapport au motif du tissu étalé.

Toutefois, il pourra ne pas en être toujours ainsi, et un point caractéristique de motif non nécessairement le plus proche d'un point de référence de position pourra être choisi comme point de référence, par exemple pour une pièce portant plusieurs points de référence de position ou pour une pièce de petites dimensions.

En outre, la détection du pas réel sur le tissu étalé peut être effectuée par des moyens autres que la sélection d'un point caractéristique de motif.

Par exemple, dans le cas d'un tissu à motif à carreaux ou à rayures, la détection du pas réel de motif peut être réalisée par comptage de lignes depuis une extrémité du tissu, dans le sens longitudinal, et depuis un bord du tissu, dans le sens transversal. Une adaptation quasi continue du placement à la réalité du tissu étalé est alors possible par mesure de chaque nouveau pas réel du motif.

## Revendications

1. Procédé pour la coupe automatique de pièces dans un tissu à motif se répétant selon un certain pas, dit pas du motif, comprenant les étapes de :

  - détermination d'un placement théorique des pièces sur le tissu,
  - mémorisation d'informations représentatives du placement théorique des pièces,

  - étalement d'au moins une couche de tissu à découper,
  - contrôle sur le tissu étalé afin de détecter un décalage éventuel entre le pas réel du motif sur le tissu étalé et le pas théorique du motif utilisé pour la détermination du placement théorique, comprenant les opérations de :
  - saisie d'images de parties du tissu étalé, et
  - vérification sur les images saisies que des emplacements correspondant à des informations mémorisées occupent des positions voulues par rapport au motif réel du tissu étalé, et
  - modification éventuelle du placement théorique en fonction du résultat du contrôle afin que le placement théorique soit adapté au pas réel du motif sur le tissu étalé.

2. Procédé selon la revendication 1, le contrôle étant effectué successivement en différents emplacements sur le tissu étalé en partant d'une extrémité longitudinale de celui-ci, et le placement étant modifié progressivement au fur et à mesure du contrôle.

3. Procédé selon la revendication 2, la position d'une pièce située à l'emplacement où le contrôle est effectué étant, à chaque contrôle, le cas échéant, modifiée de façon définitive dans le placement, en fonction du pas réel de motif détecté.

4. Procédé selon la revendication 3, les positions de pièces situées dans la partie du tissu non encore contrôlée étant, à chaque contrôle, le cas échéant, modifiées de façon anticipée dans le placement.

5. Procédé selon la revendication 4, les positions des pièces étant modifiées de façon anticipée de la même façon que pour la pièce située à l'emplacement où le contrôle est effectué.

6. Procédé selon la revendication 4, les positions des pièces étant modifiées de façon anticipée en fonction des différents décalages détectés lors des contrôles effectués depuis ladite extrémité longitudinale du tissu.

7. Procédé selon l'une quelconque des revendications 2 à 6, la coupe du tissu étant effectuée, en partant de ladite extrémité longitudinale, au fur et à mesure du contrôle.

8. Procédé selon la revendication 7, utilisant une table de coupe ayant une longueur non nécessairement égale ou supérieure à la longueur totale d'un placement, et la coupe des pièces correspondant à un placement complet comprenant plusieurs phases consécutives comportant :

- l'avance d'au moins une couche de tissu sur la table de coupe,
- l'exécution de ladite opération de contrôle sur la portion de tissu étalée sur la table,
- la modification éventuelle du placement en fonction des résultats du contrôle, et
- la coupe de pièces situées dans une zone de travail de la table de coupe.

**9.** Procédé selon la revendication 8, l'opération de contrôle étant effectuée au moins partiellement pendant l'avance du tissu.

**10.** Procédé selon la revendication 9, la saisie d'images de parties de la surface du tissu étalé étant effectuée au moins partiellement pendant l'avance du tissu.

**11.** Procédé selon l'une quelconque des revendications 1 à 10, dans lequel:

- un point caractéristique de motif du tissu, dont la position se répète de la même façon que le motif est sélectionné, et
- la détection du pas réel du motif est effectuée en détectant des positions de points caractéristiques de motif sur le tissu.

**12.** Procédé selon la revendication 11, comportant, pour chacune de plusieurs pièces, les étapes de :

- définition d'au moins un point de référence coïncidant avec un point caractéristique de motif du tissu théorique,
- mémorisation d'informations représentatives de la position du point de référence, et
- réalisation d'un contrôle par détection du décalage éventuel entre le point sur le tissu étalé dont les coordonnées correspondent aux informations de position mémorisées et le point caractéristique de motif le plus proche sur le tissu étalé, et repositionnement définitif de la pièce dans le placement en fonction du décalage détecté.

**13.** Procédé selon la revendication 12 dépendant de l'une quelconque des revendications 4 à 6, dans lequel à chaque contrôle, pour chacune des pièces non encore traitées auxquelles sont associés des points de référence, les informations représentatives des positions des points de référence sont modifiées de la même manière que la position de la pièce est modifiée de façon anticipée.

**14.** Procédé selon l'une quelconque des revendications 12 et 13, l'étape de contrôle, pour chaque pièce concernée, comprenant les opérations qui consistent à :

- capter une image d'une partie de la surface du tissu étalé incluant le point sur le tissu dont les coordonnées sur le tissu étalé correspondent aux informations de position mémorisées pour le point de référence de la pièce, et
- détecter le décalage entre la position réelle de ce point sur le tissu et la position réelle du point caractéristique de motif le plus proche dans l'image captée.

**15.** Procédé selon la revendication 14, l'étape de contrôle comprenant :

- l'affichage de l'image captée sur un écran,
- la matérialisation sur l'écran de la position du point de référence dont les coordonnées correspondent aux informations de position mémorisées, et
- la saisie à partir de l'image affichée sur l'écran de la position réelle du point caractéristique de motif le plus proche de la position matérialisée du point de référence.

**16.** Procédé selon la revendication 15, la saisie de la position réelle du point caractéristique de motif le plus proche de la position matérialisée du point de référence étant effectuée en indiquant ladite position réelle au moyen d'un curseur.

**17.** Procédé selon la revendication 14, l'étape de détection de décalage étant effectuée par traitement automatique de l'image captée.

**18.** Procédé selon l'une quelconque des revendications 12 à 17, comprenant la définition, pour chacune de plusieurs pièces, d'au moins un point de raccord dont la position est choisie pour pouvoir, après la coupe, assembler des pièces d'une façon désirée tenant compte du motif du tissu, en faisant correspondre des points de raccord de pièces différentes, le point de référence choisi pour chacune de ces pièces étant le point caractéristique de motif le plus proche du point de raccord.

**19.** Procédé selon l'une quelconque des revendications 12 à 18, comprenant la définition, pour au moins une pièce principale du placement, d'un point de référence de position absolue dont la position est choisie en fonction du positionnement désiré de la pièce par rapport au motif du tissu, le point de référence choisi pour la pièce principale étant le point caractéristique de motif le plus proche du point de référence de position absolue.

**20.** Dispositif pour la coupe automatique de pièces dans un tissu à motif se répétant selon un certain pas, dit pas du motif, comportant:

- des moyens de mémorisation d'un placement théorique de pièces sur le tissu
- une table de coupe (10)
- des moyens pour amener le tissu sur la table de coupe (10)
- un capteur d'images (60), dont les déplacements au-dessus de la table de coupe sont commandés suivant deux directions X et Y,

   caractérisé en ce qu'il comporte en outre un calculateur (18) spécialement programmé pour:

- déterminer, à partir d'images fournies par le capteur d'images, un décalage éventuel entre le pas réel du motif sur le tissu étalé et un pas théorique du placement théorique
- et pour modifier éventuellement le placement théorique, en fonction d'un tel décalage, afin que le placement théorique soit adapté au pas réel du motif sur le tissu étalé.

21. Dispositif selon la revendication 20, comportant en outre une mémoire de mémorisation des images fournies par le capteur d'images (60).

22. Dispositif selon la revendication 21, comportant en outre un écran (19) de visualisation d'images saisies par le capteur d'images.

23. Dispositif selon l'une des revendications 20 à 22, le calculateur (18) étant spécialement programmé pour déterminer ledit décalage à partir du décalage, pour une pièce, entre un point caractéristique du motif du tissu, associé à un point de référence de la pièce, et un point caractéristique sur le tissu.

24. Dispositif selon la revendication 23, le calculateur (18) étant spécialement programmé pour réaliser un traitement automatique des images prises par le capteur d'images.

25. Dispositif selon la revendication 23, le calculateur 18 étant spécialement programmé pour modifier le placement de la pièce pour laquelle un décalage est détecté et de toutes les pièces de manière anticipée, de manière à corriger des écarts systématiques entre le placement théorique et le motif réel d'un tissu étalé.

26. Dispositif selon l'une des revendications 23 à 25, le calculateur (18) mémorisant en outre des décalages détectés successivement pour différentes pièces contrôlées.

**Patentansprüche**

1. Verfahren zum automatischen Zuschneiden von Stücken aus einem gemusterten Stoff, dessen Muster sich mit einer gegebenen, als Musterschrittweite bezeichneten Schrittweite wiederholt, umfassend die Schritte:

- Festlegen einer theoretischen Plazierung der Stücke auf dem Stoff;
- Speichern von Informationen, die repräsentativ sind für die theoretische Plazierung der Stücke;
- Auslegen mindestens einer zu schneidenden Stofflage;
- Kontrollieren des ausgelegten Stoffs, um eine mögliche Abweichung zwischen der tatsächlichen Schrittweite des Musters auf dem ausgelegten Stoff und der theoretischen Schrittweite des Musters zu erfassen, welche zur Festlegung der theoretischen Plazierung verwendet wurde, umfassend folgende Operationen:
- Aufnahme von Bildern von Teilen des ausgelegten Stoffs, und
- Verifizieren anhand der aufgenommen Bilder, daß Stellen, die den gespeicherten Informationen entsprechen, Sollpositionen bezüglich des realen Musters des ausgelegten Stoffs belegen, und
- gegebenenfalls Modifizieren der theoretischen Plazierung in Abhängigkeit des Ergebnisses der Kontrolle, damit die theoretische Plazierung angepaßt wird an die reale Schrittweite des Musters auf dem augelegten Stoff.

2. Verfahren nach Anspruch 1, bei dem die Kontrolle sukzessive an unterschiedlichen Stellen auf dem ausgelegten Stoff erfolgt, ausgehend von einem längsseitigen Ende des Stoffs, wobei die Plazierung fortschreitend nach Maßgabe der Kontrolle modifiziert wird.

3. Verfahren nach Anspruch 2, bei dem die Position eines Stücks, welches sich an der Stelle befindet, an der die Kontrolle vorgenommen wird, bei jeder Kontrolle ggf. in definierter Weise in der Plazierung modifiziert wird in Abhängigkeit der erfaßten realen Schrittweite des Musters.

4. Verfahren nach Anspruch 3, bei dem die Positionen von Stücken, die sich in dem noch nicht kontrollierten Teil des Stoffs befinden, bei jeder Kontrolle ggf. in vorausschauender Weise in der Plazierung modifiziert werden.

5. Verfahren nach Anspruch 4, bei dem die in vorausschauender Weise modifizierte Positionen von Stücken in der gleichen Weise modifiziert werden wie bei einem Stück, welches sich an einer Stelle befindet, an der die Kontrolle vorgenommen wird.

6. Verfahren nach Anspruch 4, bei dem die Positionen von Stücken in vorausschauender Weise in Abhängigkeit von verschiedenen Abweichungen modifiziert werden, die im Zuge der vorgenommenen Kontrollen im Anschluß an das längsseitige Ende des Stoffs erfaßt wurden.

7. Verfahren nach einem der Ansprüche 2 bis 6, bei dem das Zuschneiden des Stoffs ausgehend von dem längsseitigen Ende nach Maßgabe der Kontrolle erfolgt.

8. Vefahren nach Anspruch 7, bei dem ein Zuschneidetisch verwendet wird, dessen Länge nicht notwendigerweise gleich oder größer ist als die Gesamtlänge einer Plazierung, wobei der Zuschnitt von Stücken, die einer vollständigen Plazierung entsprechen, mehrere aufeinanderfolgende Phasen beinhaltet, welche umfassen:

   - Vorrücken mindestens einer Lage des Stoffs auf dem Zuschneidetisch;
   - Ausführen des erwähnten Kontrollvorgangs auf dem auf den Tisch ausgelegten Teil des Stoffs,
   - eventuelle Modifizierung der Plazierung in Abhängigkeit der Ergebnisse der Kontrolle, und
   - Ausschneiden von in einer Arbeitszone des Zuschneidetisches gelegenen Stücken.

9. Verfahren nach Anspruch 8, bei dem der Kontrollvorgang zumindest teilweise im Verlauf des Vorrückens von Stoff vorgenommen wird.

10. Verfahren nach Anspruch 10, bei dem die Aufnahme von Bildern von Teilen der Oberfläche des ausgelegten Stoffs zumindest teilweise während des Vorrückens des Stoffs erfolgt.

11. Verfahren nach einem der Ansprüche 1 bis 10, bei dem

   - ein charakteristischer Punkt des Stoffmusters, dessen Position sich in der gleichen Weise wiederholt wie das Muster, ausgewählt wird, und
   - das Erfassen der reellen Musterschrittweite dadurch erfolgt, daß die Positionen der charakteristischen Punkte des Musters auf dem Stoff erfaßt werden.

12. Verfahren nach Anspruch 11, welches für jedes von mehreren Stücken folgende Phasen aufweist:

   - Definieren zumindest eines Referenzpunkts, der mit einem theoretischen charakteristischen Punkt des Stoffmusters zusammenfällt;
   - Speichern von Informationen, die repräsentativ sind für die Position des Referenzpunkts, und
   - Ausführen einer Kontrolle durch Erfassen einer eventuellen Abweichung zwischen dem Punkt auf dem ausgelegten Stoff, dessen Koordinaten gespeicherten Positionsinformationen entsprechen, und dem charakteristischen Punkt des Musters, welcher auf dem ausgelegten Stoff am nächsten gelegen ist, und endgültiges Neupositionieren des Stücks in der Plazierung abhängig von der ermittelten Abweichung.

13. Verfahren nach Anspruch 12 in Abhängigkeit von einem der Ansprüche 4 bis 6, bei dem bei jeder Kontrolle für jedes der noch nicht behandelten Stücke, denen Referenzpunkte zugeordnet sind, die für die Referenzpunkte repräsentativen Informationen in der gleichen Weise modifiziert werden, wie die Position des Stücks in der vorausschauenden Weise modifiziert wird.

14. Verfahren nach einem der Ansprüche 12 und 13, bei dem die Phase der Kontrolle für jedes betroffene Stück Operationen beinhaltet, welche umfassen:

   - Aufnehmen eines Bildes eines Teils der Oberfläche des ausgelegten Stoffs, welches den Punkt auf dem Stoff einschließt, dessen Koordinaten auf dem ausgelegten Stoff den gespeicherten Positionsinformationen für den Referenzpunkt des Stücks entsprechen, und
   - Erfassen der Abweichung zwischen der realen Position dieses Punkts auf dem Stoff und der realen Position des charakteristischen Punkts des Musters, der in dem aufgenommenen Bild am nächsten gelegen ist.

15. Verfahren nach Anspruch 14, bei dem der Vorgang der Kontrolle umfaßt:

   - Darstellen des aufgenommenen Bilds auf einem Bildschirm,
   - Markieren des Bildschirms an der Position des Referenzpunkts, dessen Koordinaten den gespeicherten Positionsinformationen entsprechen, und
   - ausgehend von dem auf dem Bildschirm dargestellten Bild, Erfassen der realen Position des charakteristischen Punkts des Musters, welche der markierten Position des Referenzpunkts am nächsten liegt.

16. Verfahren nach Anspruch 15, bei dem das Erfassen der realen Position des charakteristischen Punkts des Musters, der der markierten Position des Referenzpunkts am nächsten liegt, dadurch erfolgt, daß die reale Position mit Hilfe eines Cursors angezeigt wird.

17. Verfahren nach Anspruch 14, bei dem der Vorgang des Erfassens der Abweichung dadurch vorgenommen wird, daß eine automatische Bearbeitung des aufgenommenen Bilds erfolgt.

**18.** Verfahren nach einem der Ansprüche 12 bis 17, umfassend das Definieren mindestens eines Verbindungspunkts für jedes von mehreren Stücken, wobei die Position des Verbindungspunkts so gewählt wird, daß man nach dem Zuschneiden Stücke in gewünschter Weise unter Berücksichtigung des Stoffmusters zusammensetzen kann, indem dafür gesorgt wird, daß die Verbindungspunkte verschiedener Stücke einander entsprechen, wobei der für jedes dieser Stücke gewählte Referenzpunkt der charakteristische Punkt des Musters ist, welcher dem Verbindungspunkt am nächsten gelegen ist.

**19.** Verfahren nach einem der Ansprüche 12 bis 18, umnfassend das für zumindest ein Hauptstück der Plazierung erfolgende Definieren eines Referenzpunkts für eine absolute Position, dessen Position in Abhängigkeit der gewünschten Positionierung des Stücks in bezug auf das Stoffmusters gewählt ist, wobei der gewählte Referenzpunkt für das Hauptstück der charakteristische Punkt des Musters ist, welcher dem Referenzpunkt der absoluten Position am nächsten gelegen ist.

**20.** Vorrichtung für den automatischen Zuschnitt von Stücken aus einem gemusterten Stoff, dessen Muster sich mit einer gegebenen, als Musterschrittweite bezeichneten Schrittweite wiederholt, umfassend:

- eine Einrichtung zum Speichern einer theoretischen Plazierung der Stücke auf dem Stoff,
- einen Zuschneidetisch (10),
- eine Einrichtung zum Vorrücken des Stoffs auf dem Zuschneidetisch (10),
- einen Bildaufnehmer (60), dessen Verschiebebewegungen oberhalb des Zuschneidetisches in zwei Richtungen X und Y gesteuert werden,

dadurch gekennzeichnet, daß sie außerdem einen Rechner (18) aufweist, der speziell programmiert ist, um

- ausgehend von den von dem Bildaufnehmer gelieferten Bilder eine mögliche Abweichung zwischen der realen Musterschrittweite auf dem ausgelegten Stoff und einer theoretischen Schrittweite der theoretischen Plazierung zu ermitteln,
- und um ggf. die theoretische Plazierung in Abhängigkeit einer solchen Abweichung zu modifizieren, damit die theoretische Plazierung angepaßt wird an die reale Schrittweite des Musters auf dem ausgelegten Stoff.

**21.** Vorrichtung nach Anspruch 20, außerdem umfassend einen Speicher zum Speichern der von dem Bildaufnehmer (60) gelieferten Bilder.

**22.** Vorrichtung nach Anspruch 21, außerdem umfassend einen Bildschirm (19) zur Sichtbarmachung von Bildern, die mit Hilfe des Bildaufnehmers erfaßt wurden.

**23.** Vorrichtung nach einem der Ansprüche 20 bis 22, bei der der Rechner (18) speziell dazu programmiert ist, die erwähnte Abweichung anhand derjenigen Abweichung zu ermitteln, die für ein Stück zwischen einem charakteristischen Punkt des Musters des Stoffs, der einem Referenzpunkt des Stücks zugeordnet ist, und einem charakteristischen Punkt auf dem Stoff vorhanden ist.

**24.** Vorrichtung nach Anspruch 23, bei der der Rechner (18) speziell programmiert ist, um eine automatische Verarbeitung der Bilder vorzunehmen, die von dem Bildaufnehmer aufgenommen wurden.

**25.** Vorrichtung nach Anspruch 23, bei der der Rechner (18) speziell programmiert ist, um die Plazierung desjenigen Stücks, bei dem eine Abweichung festgestellt wird, sowie sämtlicher Stücke in vorausschauender Weise zu modifizieren, derart, daß systematische Abweichungen zwischen der theoretischen Plazierung und dem realen Muster eines ausgelegten Stoffs korrigiert werden.

**26.** Vorrichtung nach einem der Ansprüche 23 bis 25, bei der der Rechner (18) außerdem Abweichungen abspeichert, die sukzessive für verschiedene kontrollierte Stücke erfaßt werden.

**Claims**

**1.** A method of automatically cutting pieces from a fabric having a pattern which is repeated with a certain pitch, called pitch of the pattern, the method comprising the following steps:

- determining an ideal layout for the pieces on the fabric;
- storing information representative of the ideal layout of the pieces;
- spreading out at least one layer of fabric to be cut;
- monitoring the spread-out fabric so as to detect any offset between the real pitch of the pattern on the spread-out fabric and the ideal pitch of the pattern used to determine the ideal layout, the method comprising the following operations:
- taking images of portions of the spread-out fabric; and

- verifying the images as taken to see whether the locations corresponding to the stored information occupy the desired positions relative to the real pattern on the spread-out fabric; and
- modifying, where necessary, the ideal layout as a function of the result of the monitoring so that the ideal layout matches the real pattern pitch on the spread-out fabric.

**2.** A method according to claim 1, the monitoring step being performed successively at various locations on the spread-out fabric starting from a longitudinal end thereof, and the layout being modified progressively as the monitoring step proceeds.

**3.** A method according to claim 2, the position of a piece situated at the location at which the monitoring operation is performed being, during each of the monitoring operations and where necessary, modified finally in the layout as a function of the real pattern pitch as detected.

**4.** A method according to claim 3, the positions of the pieces situated in the portion of the fabric that has not yet been monitored being, during each of the monitoring operations and where necessary, modified pre-emptively in the layout.

**5.** A method according to claim 4, the positions of the pieces being modified pre-emptively in the same way as for the piece situated at the location at which the monitoring operation is performed.

**6.** A method according to claim 4, the positions of the pieces being modified pre-emptively as a function of the various offsets detected during the monitoring operations performed starting from said longitudinal end of the fabric.

**7.** A method according to any one of claims 2 to 6, the fabric being cut starting from said longitudinal end as the monitoring proceeds.

**8.** A method according to claim 7, a cutting table being used whose length is not necessarily equal to or greater than the total length of a layout, and cutting the pieces corresponding to an entire layout comprising a plurality of consecutive stages including:

- advancing at least one layer of fabric on the cutting table;
- performing said monitoring operation on the portion of fabric spread out on the table;
- modifying, where necessary, the layout as a function of the results of the monitoring; and
- cutting pieces situated in a working zone of the cutting table.

**9.** A method according to claim 8, the monitoring operation being performed at least in part while the fabric is advancing.

**10.** A method according to claim 9, the taking of images of portions of the surface of the spread-out fabric being performed at least in part while the fabric is advancing.

**11.** A method according to any one of claims 1 to 10, in which:

- a characteristic point of the pattern of the fabric is selected, the position of which point is repeated in the same way as the pattern; and
- the real pitch of the pattern is detected by detecting positions of characteristic points of the pattern on the fabric.

**12.** A method according to claim 11, including, for each of a plurality of pieces, the following steps:

- defining at least one reference point coinciding with a characteristic point of the pattern of the ideal fabric;
- storing information representative of the position of the reference point; and
- performing a monitoring operation by detecting any offset between the point on the spread-out fabric, the co-ordinates of which point correspond to the stored position information, and the nearest characteristic point of the pattern on the spread-out fabric, and performing final repositioning of the piece in the layout as a function of the detected offset.

**13.** A method according to claim 12 dependent on any one of claims 4 to 6, in which, during each monitoring operation, for each of the pieces that have not yet been processed and with which reference points are associated, the information representative of the positions of the reference points are modified in the same way as the position of the piece is pre-emptively modified.

**14.** A method according to claim 12 or 13, for each piece in question, the monitoring step including the following operations:

- taking an image of a portion of the surface of the spread-out fabric, which portion includes the point on the fabric whose co-ordinates on the spread-out fabric correspond to the stored position information for the reference point of the piece; and
- detecting the offset between the real position of this point on the fabric and the real position of the nearest characteristic point of the pattern in the image as taken.

15. A method according to claim 14, the monitoring step including:

   - displaying the image as taken on a screen;
   - causing to appear on the screen the position of the reference point whose co-ordinates correspond to the stored position information; and
   - inputting, on the basis of the image displayed on the screen, the real position of the characteristic point of the pattern that is nearest to the position of the reference point as it appears.

16. A method according to claim 15, the real position of the characteristic point of the pattern that is nearest to the position of the reference point as it appears being input by indicating said real position by means of a cursor.

17. A method according to claim 14, the offset detection step being performed by automatically processing the image as taken.

18. A method according to any one of claims 12 to 17, including, for each of a plurality of pieces, defining at least one match point whose position is chosen so that, after cutting, it is possible to assemble pieces together in a desired manner taking into account the pattern of the fabric, by bringing the match points of the various pieces into register with one another, the reference point chosen for each of the pieces being the characteristic point of the pattern that is nearest to the match point.

19. A method according to any one of claims 12 to 18, including defining, for at least one main piece of the layout, an absolute position reference point whose position is chosen as a function of the desired positioning of the piece relative to the pattern of the fabric, the reference point chosen for the main piece being the characteristic point of the pattern that is nearest to the absolute position reference point.

20. A device of automatically cutting pieces from a fabric having a pattern which is repeated with a certain pitch, called pitch of the pattern, the device including:

   - storing means for storing an ideal layout of pieces on the fabric;
   - a cutting table (10);
   - means for bringing the fabric on the cutting table (10);
   - an image sensor (60) the displacements of which over the cutting table are controlled along two directions X and Y;

characterised in that it further includes a computer (18) that has been specially programmed for:

   - determining, from images supplied by the image sensor, a possible offset between the real pattern pitch on the spread-out fabric and an ideal pitch of the ideal layout; and
   - modifying, where necessary, the ideal layout as a function of such an offset so that the ideal layout matches the real pattern pitch on the spread-out fabric.

21. A device according to claim 20, further including an image storing memory supplied by the image sensor (60).

22. A device according to claim 21, further including an image display screen (19) input by the image sensor.

23. A device according to one of claims 20 to 22, the computer (18) being specially programmed for determining said offset from the offset, for a piece, between a characteristic point of the fabric pattern associated with a reference point of the piece, and a characteristic point on the fabric.

24. A device according to claim 23, the computer (18) being specially programmed for automatically processing the images taken by the image sensor.

25. A device according to claim 23, the computer (18) being specially programmed for modifying the layout of the piece for which an offset is detected and of all the pieces pre-emptively so as to correct systematic differences between the ideal layout and the real pattern of a spread-out fabric.

26. A device according to one of claims 23 to 25, the computer (18) further storing offsets detected successively for different controlled pieces.

FIG_1

EP 0 759 708 B1

FIG_2

FIG_3A

FIG_4A

FIG_3B

FIG_4B

Lancement avance convoyeur ~100

Elaboration liste ordonnée des pièces à repositionner ~102

120~ Elaboration liste ordonnée des images à capter

104 reste pièce à repositionner ?

non

oui

Fin

122~ reste image à capter ?

non

oui

106 image disponible ?

non

132 pièce à couper dispo ?

non

oui

124~ espace mémoire dispo ?

non

oui

affichage image ~108

mesure vecteur décolage ~110

modification placement ~112

pièce disponible pour coupe ~114

effacement image et libération espace mémoire ~116

Couper pièce

134

Point corresp. aux coordonnées mémorisées sur table ?

non

126

oui

128 déplacement ensemble mobile

130 image captée et mémorisée

FIG_5